# EUROPEAN PATENT APPLICATION

(11) **EP 3 324 230 A1**
(43) Date of publication of application: **23.05.2018**
(21) Application number: 17196641.9
(22) Date of filing: 16.10.2017
(51) Int. Cl.: G02B 6/44, H04Q 1/14, H04Q 1/02, H04Q 1/06

(54) **FRAME FOR TELECOMMUNICATION LINES**

(30) Priority: 17.11.2016 IT 201600116011
(71) Applicant: C.I.S. Sud s.r.l., 00040 Ariccia (RM) (IT)
(72) Inventor: BERNARDINI, Giuseppe, 00040 Ariccia (RM (IT)
(74) Representative: Santi, Filippo

(57) **Abstract**

The present invention concerns a frame for telecommunication lines comprising a structure in the form of a parallelepiped with vertical development, with a lower base, an upper base, a front face, a back face, a right side face and a left side face, characterised in that this structure is open at least at that front face.

## Description

The present invention concerns a frame for telecommunication lines with the same functionality and simplified structure compared to a cabinet for telecommunication lines of known type.

The invention refers to the field of installations relating to telephone and more in general telecommunications distribution networks, in which the distribution cabinet of telecommunications lines plays a central role.

It is well known, in fact, that the telephone network is essentially made up primarily of cables of great potential starting from the exchange, which house a number of optical fibres, and secondly of cables of small potential, which reach the customers' premises, which contain a small number of optical fibres. High-capacity cables constitute the so-called primary network, while low-capacity cables make up the secondary network. The essential element that connects these cables to each other and allows the distribution of pairs or lines is the so-called distribution cabinet. In addition to this, in the exchange, the telephone cables end up on attestation or termination modules, housed inside terminating cabinets.

A primary network cable starts from the exchange's termination cabinet and reaches the distribution cabinet, from which the same lines, spread over more than one cable, of the secondary network, reach the various residential buildings of the users. The distribution cabinet is generally located a few kilometres away from the exchange, while it is a few hundred metres away from the users.

Both in the case of the termination cabinet and the distribution cabinet, the cabinet is generally made up of a metal structure, which collects inside a quantity of junction or termination modules, called drawers, where the optical fibres, following separation paths in the entrance and exit, are locked for their management.

A cabinet, so far conceived, has an aspect of use that can be defined as "static", where the intervention activity is not frequent and, when required, is difficult.

With the deployment of the broadband network, there will be an increasing number of fibre optics used in telephone networks and their management will be increasingly difficult and complicated. On the contrary, the maintenance and distribution interventions on the fibers will have to be simple and fast, with the identification of them in a certain way.

Existing cabinets are therefore severely inadequate for future needs.

In this context, the solution according to the present invention is inserted, whose purpose is to provide cabinets made in a more easily accessible way, i.e. where the fibres can be more easily identifiable and accessible in their paths, including above all their maneuverability, for a new necessary arrangement of the fibres.

In this context is inserted the solution according to the present invention, which aims to provide a frame for telecommunication lines, consisting of an open structure and, consequently, such as to allow easy and fast access to the devices hosted in it.

The aim of the present invention is therefore to provide a frame for telecommunication lines, which allows to overcome the limits of the telecommunication line distribution cabinets according to the prior art and to obtain the technical results described above.

Further purpose of the invention is that said frame for telecommunication lines can be realised with substantially contained costs, both in terms of production costs and management costs.

Last but not least, the aim of the invention is to propose a frame for telecommunication lines that is simple, safe and reliable.

It therefore forms a specific object of the present invention a frame for telecommunication lines, comprising a structure in the form of a parallelepiped with vertical development, with a lower base, an upper base, a front face, a back face, a right side face and a left side face, characterised in that this structure is open at least at that front face.

Preferably, according to the present invention said structure is also open at the said rear face.

In particular, according to the invention, the space inside this structure is vertically divided, by means of two uprights, into three areas, respectively a first lateral area, to accommodate cables entering the frame, a central area, to accommodate a plurality of fibre junction modules and/or a plurality of fibre termination modules, and a second lateral area, to accommodate a dispersion of the optical braces exiting from said fibre junction modules, and more preferably said second lateral area is wider than said first lateral area.

Moreover, always according to the invention, said fibre junction modules include trays, in which are housed a plurality of fibre-holding devices and a plurality of fibre coupling devices and preferably can also comprise cylindrical dispersers.

Moreover, said trays can be separately coupled with possibility of rotation around a hinge on the end of a first side and are clamped in a removable way, on the end of a second free side with a magnet and/or a plastic manual pawl.

It is evident the effectiveness of the frame for telecommunication lines of the present invention, which allows to have a frame for telecommunication lines structurally lightened and built like Meccano model, easily machinable for any normal intervention activity, with a very low cost for construction and maintenance, compared to the cabinets used so far for the same functions.

The present invention will now be described, by way of illustration, but not as a limitation, according to a preferred embodiment, with particular reference to the figures of the attached drawings, wherein:
- figure 1 shows a frontal view of a frame for telecommunication lines according to the present invention,
- figure 2 shows a perspective view of the frame for telecommunication lines of figure 1,
- figure 3 shows a perspective view of a frame for telecommunication lines wherein it is shown only one junction module,
- figure 4 shows a perspective view of a tray for a frame for telecommunication lines according to the present invention, and
- figure 5 shows a top view of the tray of figure 4.

Referring to the figures, a frame for telecommunication lines will conveniently have the same standard external dimensions as the cabinets currently in use, i.e. height of 220mm, width of 90mm and depth of 30mm.

Inside the frame, with the numerical reference 1 is indicated a first vertical lateral area dedicated to the arrival of cables, e. g. 144 optical fibre cables; a vertical central area 2 is reserved for the arrangement of the fibre junction modules; and a second vertical lateral area 3 is dedicated to the dispersion of the outgoing optical braces.

The vertical area 2, reserved for the arrangement of the fiber junction modules, is off centre to the left of the frame for communication lines according to the present invention, given the need to make larger the second vertical lateral area 3, where almost all the dispersion of the braces takes place.

In fact, dispersion is a function of the available space, and therefore more space will give rise to a better dispersion, which naturally facilitates the management of fibres.

The cables arrive at the frame for communication lines according to the present invention coming from above and are orderly open at the points of sifting 4, from where the relative tubes start, which reach two to two each tray 5 of a closer junction module, consisting of six trays 5. The braces come out in a number of forty-eight from each tray 5 and are collected by the rings 6, and undergo an initial dispersion on the above cylindrical dispersers 7. Each cylindrical disperser 7 receives the braces of two trays 5. The rest of the dispersion is arranged in the space of the cavity 3.

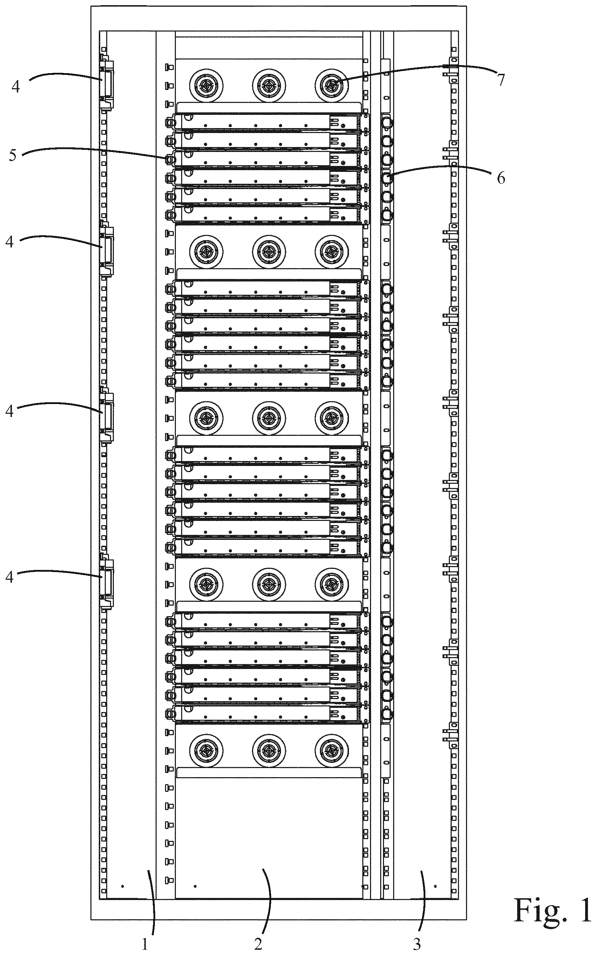

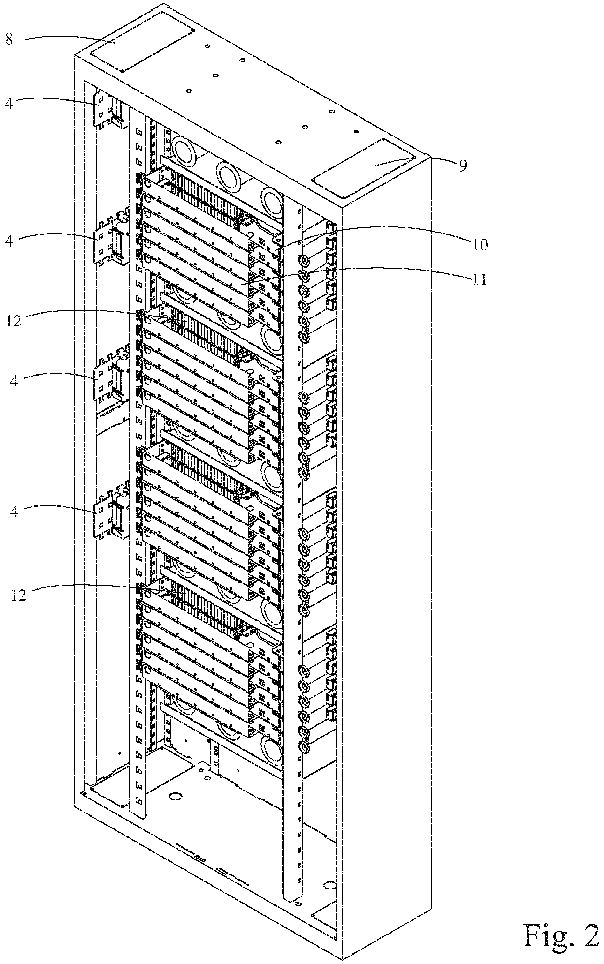

Referring to Figures 1 and 2, in the frame for communication lines according to the present invention are shown four modules, each with six trays 5, for a maximum total fibre management capacity of 48x6x4 = 1152 optical fibres.

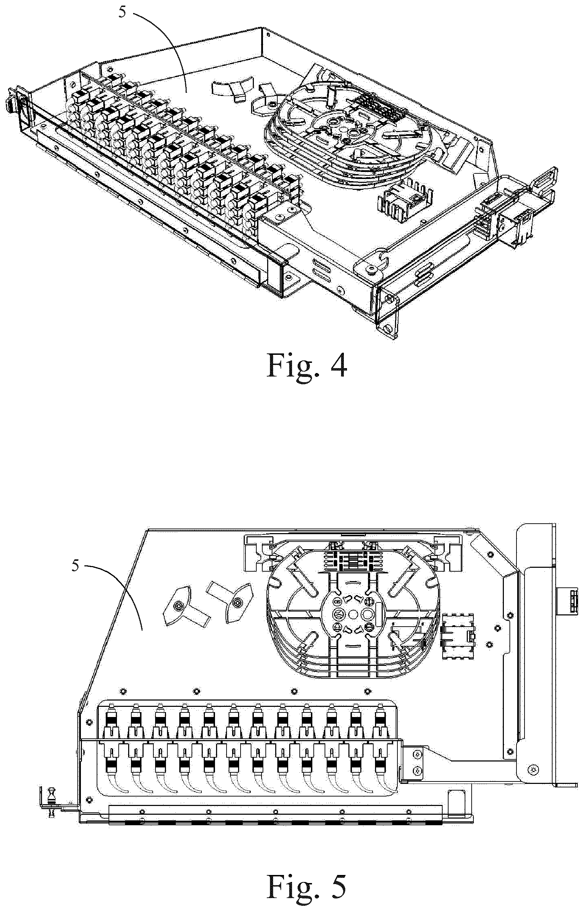

The inlet 8 of the 144 optical fibre cables is at the top on the left side, while the outlet 9 of the braces is at the top on the right side. The single trays 5, which, as shown in figures 4 and 5, house the fibre junctions, are separately bound with the possibility of rotation around a hinge 10 at the end on the right side and are fixed at the end of the free left side by a magnet and a plastic manual pawl (not shown); the trays 5 have a protective and hinged fold-away faceplate 11 for access to the connectors of the single fibres, inserted on the connecting sleeves 12 of the racks.

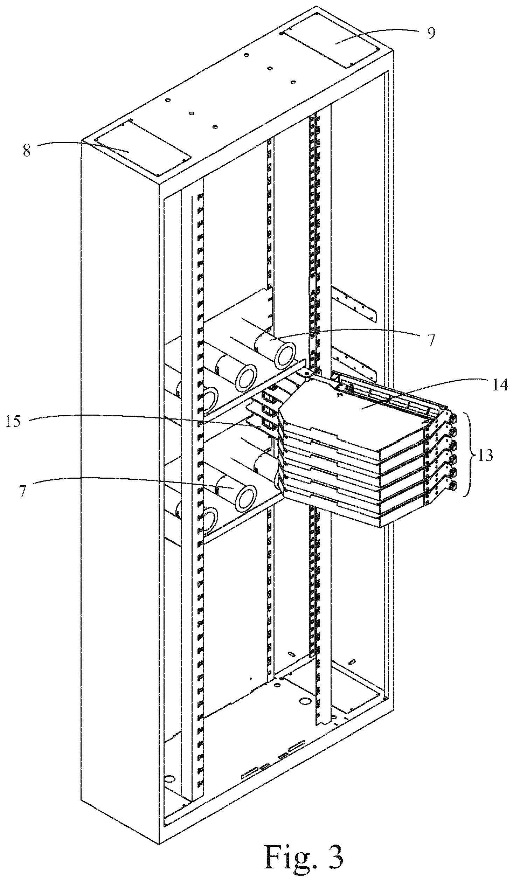

In particular, Fig.3 shows a group of six trays rotated by 90° with respect to the operating position, shown in figures 1 and 2.

Each tray 5 has a lid 14, precluding internal access.

Each tray 5 has the fixed part of the hinge 15 that can be moved from the rack, which allows the same to be completely unhooked for a more comfortable position of intervention.

The present invention has been described by way of illustration, but not limitation, according to its preferred embodiments, but it is to be understood that variations and/or modifications may be made by experts in the field without going beyond its scope of protection, as defined by the attached claims.

## Claims

1. Frame for telecommunication lines comprising a structure in the form of a parallelepiped with vertical development, with a lower base, an upper base, a front face, a back face, a right side face and a left side face, **characterised in that** this structure is open at least at that front face.

2. Frame for telecommunication lines secondo la rivendicazione 1, **characterised in that** said structure is also open at the said rear face.

3. Frame for telecommunication lines according to claim 1 or 2, **characterised in that** the space inside this structure is vertically divided, by means of two uprights, into three areas, respectively a first lateral area (1), to accommodate cables entering the frame, a central area (2), to accommodate a plurality of fibre junction modules and/or a plurality of fibre termination modules, and a second lateral area (3), to accommodate a dispersion of the optical braces exiting from said fibre junction modules.

4. Frame for telecommunication lines according to claim 3, **characterised in that** said second lateral area (3) is wider than said first lateral area (1).

5. Frame for telecommunication lines according to any one of the preceding claims, **characterised in that** said fibre junction modules include trays (5), in which are housed a plurality of fibre-holding devices and a plurality of fibre coupling devices.

6. Frame for telecommunication lines according to claim 5, **characterised in that** said fibre coupling devices also comprise cylindrical dispersers (7).

7. Frame for telecommunication lines according to claim 5 or 6, **characterised in that** said trays (5) are separately coupled with possibility of rotation around a hinge (10) on the end of a first side.

8. Frame for telecommunication lines according to claims 5-7, **characterised in that** said trays (5) are clamped on the end of a second free side with a magnet and/or a plastic manual pawl.
